# EUROPEAN PATENT APPLICATION

(11) **EP 1 130 500 A2**
(43) Date of publication of application: **05.09.2001**
(21) Application number: 01300144.1
(22) Date of filing: 09.01.2001
(51) Int. Cl.: G06F 1/00

(54) **System and method for distribution and monitoring of copyrighted data**

(30) Priority: 20.01.2000 JP 2000014195
(71) Applicant: SONY CORPORATION, Tokyo 141 (JP)
(72) Inventor: Hirai, Jun, Intellectual Property Department, Tokyo 141 (JP)
(74) Representative: Turner, James Arthur

(57) **Abstract**

In order to appropriately manage or monitor a content distribution status and to accurately impose a content royalty, a content distribution system includes a monitoring apparatus for issuing authentication information showing a content-use consent and monitoring the distribution of a content, and a distribution apparatus for distributing the content via a predetermined distribution path with the attached authentication information. The monitoring apparatus, in which the authentication information is composed of the set of time identification information showing the current time and distributor identification information assigned to the distribution apparatus, obtains a content being distributed in the distribution path, and can determine the validity of the distributed content on the basis of whether or not the authentication information is attached to the content.

## Description

This invention relates to content distribution systems, content distribution methods, content distribution status monitoring apparatus and methods and content disbributed using such apparatus and methods.

A copyright is a relatively exclusive property right capable of being used for authored material and is contained in one of commonly called "intangible property rights". The "authored material" referred to herein are ones in which thoughts or feelings are expressed in a creative manner and refers to ones which belong to the fields of the arts, sciences, fine arts, or music. A copyright is protected by, for example, copyright acts by individual countries and by international treaties such as the Berne Convention or the Universal Copyright Convention.

It is quite rare for a copyright to be asserted by the copyright owner himself, and it is usual for the copyright owner to obtain a fixed amount of payment for the use of the copyright by another person, and consents to the use of the copyright. For example, a record company having copyrights on music content such as musical pieces can demand, with respect to a broadcasting station which uses, that is, broadcasts, music content and to content distribution dealers, copyright royalty corresponding to the number of times the content is used.

In recent years, information processing and information communication technologies have made rapid progress, and internationalization has advanced remarkably in the cultural and economical fields. In such a social environment, the situation concerning copyrights is constantly changing. It is said that the history of copyright protection dates from the invention of printing technology at around the middle of the fifteenth century. At the present time, all data and content are being digitized, so that they can be handled on computer systems, and as a consequence of this, duplication of copyrighted material is becoming progressively easier. Therefore, it is considered to be necessary to assist authorized use of copyrighted material or to eliminate unauthorized use thereof from the viewpoint of information technology, and to expand the protection of copyrights.

In the digital content world, as one means for stopping illegal copying, a technique called "digital watermarking" or "data hiding" can be cited. The "digital watermarking" means that information is embedded into content such as images, music, etc., in a barely visible or barely audible form. For example, as a result of embedding copyright information by digital watermarking, the watermark, that is, the copyright information, can be isolated when the content is extracted at a later time, so that the data distribution channel and the presence or absence of a use right can be ascertained.

For example, in the music record industry and in the broadcast industry, attempts are considered in which use of authored material is automatically managed by embedding an ISRC (International Standard Recording Code), which is identification information provided uniquely for each musical piece, as copyright information, into music content.

Between music record companies as copyright owners and broadcasting stations as copyright users, for example, a contract is signed such that the copyright royalty is paid in an amount corresponding to the number of times each musical piece is broadcast. Therefore, it is possible for the music record company (or a monitoring company entrusted by a record company) to count the number of times each musical piece is used on the basis of the appearance of the ISRC by receiving the broadcast wave and decrypting the embedded digital watermark. Furthermore, even if the broadcasting station does not accurately or honestly declare the copyright royalty, it would be possible for the music record company to reveal an erroneous declaration on the basis of the count value and to impose a penalty, such as canceling a copyright-use contract, as necessary.

In order to thoroughly stop copyright infringement by utilizing the ISRC, it is desired that an ISRC be embedded in each musical piece at the time the music content is stored (that is, manufactured) on a storage medium, such as a CD (Compact Disc) .

However, dependence on the above-described method would make it impossible to track or monitor use of music content played back from a conventional CD before digital watermarks were embedded. Furthermore, it is almost impossible to replace all existing content with new content having digital watermarks.

In addition, in order to add digital watermarks into all content, a data field of 60 bits is required only for music, causing the overall record length to be increased considerably.

Various respective aspects and features of the invention are defined in the appended claims.

Embodiments of the present invention relate to content distribution techniques for distributing or providing content among remote locations, and in particular, relate to content a distribution technique for distributing or providing content to a large number of people, for example, in the form of broadcast waves and network transfer. More particularly, embodiments of the present invention relate to content distribution techniques for a content creator, etc., to securely distribute or provide content having predetermined use rights, including copyrights, such as for music, video, etc., and in particular, relates to a content distribution technique for owners of content rights to distribute or provide contents or to appropriately manage or monitor distribution status.

The present invention has been achieved in view of the above-described details. Embodiments of the present invention can provide a superior content distribution technique which is capable of distributing or providing content to a large number of people, for example, in the form of broadcast waves and network transfer.

Embodiments of the present invention can provide a superior content distribution technique which is capable of securely distributing or providing content having a predetermined use right, including copyright, such as music, video, etc.

Embodiments of the present invention can provide a superior content distribution technique in which it is possible for a right owner of content to appropriately manage or monitor a distribution or provision status of the content, and to accurately impose a content royalty.

Embodiments of the present invention can provide a superior content distribution technique which is capable of appropriately managing or monitoring a distribution or provision status of content with respect to content played back from a recording medium which has already been distributed.

According to a first aspect of the present invention, there is provided a content distribution system for distributing content owned by a predetermined right owner, comprising: a monitoring apparatus for monitoring the distribution of contents by issuing authentication information showing a content-use consent; and a distribution apparatus for distributing the content with the attached authentication information received from the monitoring apparatus via a predetermined distribution path.

The monitoring apparatus referred to herein is an apparatus which is operated, for example, by a copyright owner having a copyright on contents, or by a person who is entrusted by the copyright owner with the business of monitoring use of content. In contrast, a distribution apparatus is an apparatus which is operated by a dealer who is entrusted with a content-use consent by the copyright owner. It is preferable that the monitoring apparatus and the distribution apparatus be interconnected by a secure transmission medium, such as a dedicated line, so that authentication information and other various types of information (to be described later) may be exchanged securely.

In an embodiment to be described later, a description is given by using as an example a case in which content is distributed by a broadcasting station as a content distribution dealer using broadcast waves. However, it should be understood that the distribution referred to in the present invention is not limited to "broadcasts", and can be similarly used for a case in which, for example, a network broadcast service via a LAN (Local Area Network) and the Internet, and content distribution via various types of storage media, such as a CD (Compact Disc), MO (Magnetooptical Disc), or DVD (Digital Versatile Disc), are performed.

It is possible for the monitoring apparatus to obtain content being distributed in the predetermined distribution path and to determine the validity of a content distribution operation by the distribution apparatus on the basis of whether or not authentication information is attached to the content.

The authentication information which is issued by the monitoring apparatus may be formed of the set of time identification information showing the current time and distributor identification information assigned to the distribution apparatus.

The monitoring apparatus may issue an encryption key in addition to the authentication information. In such a case, the distribution apparatus can distribute content with attached authentication information encrypted using the encryption key received from the monitoring apparatus via a predetermined distribution path. Therefore, it is possible to appropriately prevent the authentication information attached to the content from being falsified in the distribution path.

The distribution apparatus may embed authentication information into content by using a digital watermarking technique. Alternatively, the distribution apparatus may embed authentication information into a content distribution signal by using a digital watermarking technique. As a result of using a digital watermarking technique, ordinary viewers and listeners who receive a broadcast wave need not be aware of the presence of the authentication information. In particular, in the latter case, since the authentication information need not be embedded into the content itself, authentication information can be easily embedded into music content as well played back from a storage medium which has already been distributed.

Normally, each content has a specific content identifier. For example, in the case of a music content, an ISRC (International Standard Recording Code), which can be identified anywhere in the world, is assigned to each musical piece.

It is possible for the distribution apparatus to store the distribution history of each content distributed via the predetermined distribution path in such a manner as to be associated with content identification information.

In the monitoring apparatus, identification information by which the distribution history can be addressed may be contained in the authentication information. In this case, time identification information need not be contained in the authentication information.

Furthermore, it is possible for the distribution apparatus to extract only the history information associated with specific content by masking the distribution history with a predetermined filter and to transfer it to a monitoring dealer such as a monitoring apparatus. In the case of the above-described ISRC, it is formed of five groups 1 to 5. Of these, three digits corresponding to group 3 indicate a first owner code. By performing filtering by using this group 3 as a mask, it is possible to extract only the distribution history information relating to the contents of a specific copyright owner. In contrast, on the monitoring apparatus side, the distribution status of each content can be managed on the basis of the distribution history information. For example, it is possible to charge an accurate copyright royalty, corresponding to the number of times the content is used, to the distribution apparatus, that is, the broadcasting station.

According to a second aspect of the present invention, there is provided a content distribution method for distributing content owned by a predetermined right owner, comprising: a first step of issuing authentication information showing a content-use consent; a second step of distributing the content with the attached authentication information issued in the first step via a predetermined distribution path; and a third step of monitoring the distribution of the content in the distribution path.

The above-described third step can obtain content being distributed in the predetermined distribution path and determine the validity of the content distribution operation on the basis of whether or not the authentication information is attached to the content.

The above-described first step may issue, as the authentication information, the set of time identification information showing the current time and distributor identification information assigned to the distribution of the content.

Furthermore, the above-described first step may issue an encryption key in addition to the authentication information. In this case, the above-described second step can distribute the content via the predetermined distribution path with attached authentication information encrypted using the encryption key issued in the first step, making it possible to appropriately prevent the authentication information from being falsified.

The above-described second step may embed the authentication information into the content by using a digital watermarking technique. Alternatively, the second step may embed the authentication information into a distribution signal of the content by using a digital watermarking technique.

Each content usually has specific content identification information. In such a case, it is possible to further provide a fourth step of storing the distribution history of each content distributed via the predetermined distribution path in the second step in such a manner as to be associated with the content identification information. Furthermore, identification information by which the distribution history can be addressed may be contained in the authentication information. In this case, time identification information need not be contained in the authentication information. It is possible to further provide a fifth step of extracting only the history information associated with specific content by masking the distribution history with a predetermined filter and a sixth step of managing a state in which each content is distributed on the basis of the distribution history.

According to a third aspect of the present invention, there is provided a content monitoring apparatus or method for monitoring the use of a content owned by a predetermined right owner, wherein means is provided for issuing authentication information showing a use consent to a content user.

The authentication information may contain at least time identification information showing the current time and distributor identification information assigned to the distributor.

An encryption key may be issued in addition to the authentication information.

A means or a step for obtaining the contents being used and checking the presence or absence of authentication information may be further provided.

A means or a step for managing a content use status on the basis of the content use history of a content user may be further provided.

According to a fourth aspect of the present invention, there is provided a content using apparatus or method for using contents after receiving a consent from a predetermined right owner, comprising: receiving means or step for receiving authentication information showing a content-use consent from the outside; and using means or step for using the contents with the received authentication information attached.

The using means or step can distribute the contents with the authentication information via a predetermined distribution path. As a result, the validity of the content can be checked on the basis of whether or not authentication information is contained in the content to be used in the distribution path.

The authentication information can contain at least time identification information showing the current time and user identification information assigned to the user.

The receiving means or step may receive an encryption key in addition to the authentication information, and the using means or step may use the contents with attached authentication information encrypted using the encryption key. As a result, it is possible to appropriately prevent the authentication information from being falsified in the distribution path.

The using means may embed authentication information into content by using a digital watermarking technique. Alternatively, the using means or step may embed authentication information into a content distribution signal by using a digital watermarking technique.

Each content usually has specific content identification information. Therefore, history information storage means or step can store the use history of each content used in the using means or step in such a manner as to be associated with the content identification information. Furthermore, identification information by which the use history can be addressed may be contained in the authentication information. In this case, time identification information need not be contained in the authentication information.

It is possible to extract only history information associated with a specific content by masking the stored use history with a specific filter. It is also possible to manage the use status of each content on the basis of the stored use history.

The invention will now be described by way of example with reference to the accompanying drawings, throughout which like parts are referred to by like references, and in which:
Fig. 1 is a diagram schematically showing the configuration of a content distribution system 100 according to an embodiment of the present invention;
Fig. 2 is a diagram schematically showing another configuration of the content distribution system 100 according to the embodiment of the present invention;
Fig. 3A is a schematic representation of a state in which authentication information which is embedded by digital watermark is encrypted, showing a state in which authentication information composed of a time ID and a broadcasting station ID is encrypted;
Fig. 3B is a schematic representation of a state in which authentication information which is embedded by digital watermark is encrypted, showing a state in which a time ID in the form of plain text is attached to the encrypted authentication information; and
Fig. 4 is a diagram showing in detail the configuration of the content distribution system 100 according to the embodiment of the present invention.

An embodiment of the present invention will be described below with reference to the attached drawings.

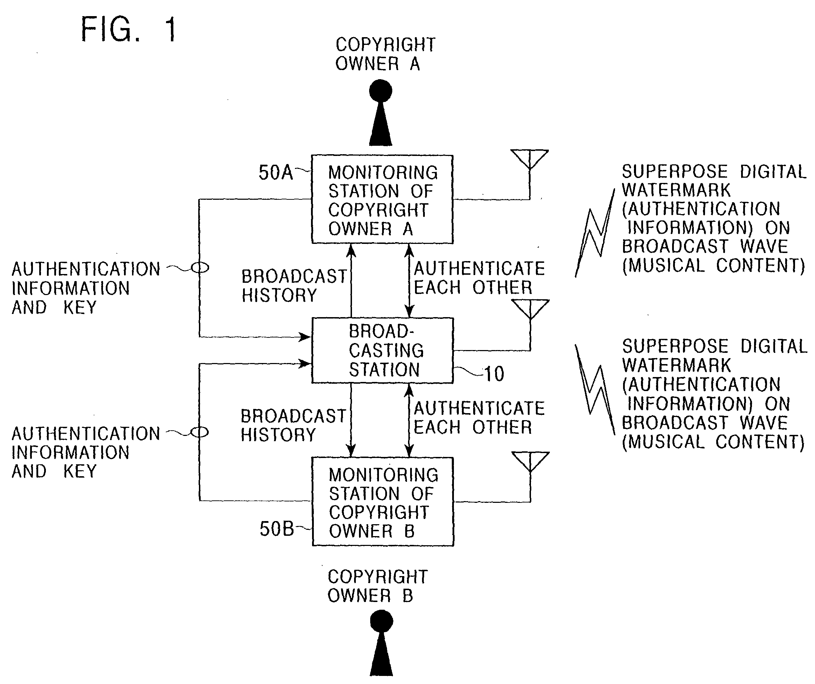

Fig. 1 schematically shows the concept of a content distribution system 100 according to the present invention. As shown in Fig. 1, the content distribution system 100 comprises a broadcasting station 10 and a monitoring station 50.

The monitoring station 50 is operated by the copyright owner or is operated by an organization or company which is entrusted by the copyright owner so as to track or monitor the use of authored material. The copyright owner may be a music record company which stores music contents in recording media, such as CDs, and which sells and distributes them. Also, the monitoring station 50 monitors each content, that is, each piece of authored material, which is used in broadcasting by the broadcasting station, and the detailed procedure thereof will be described later.

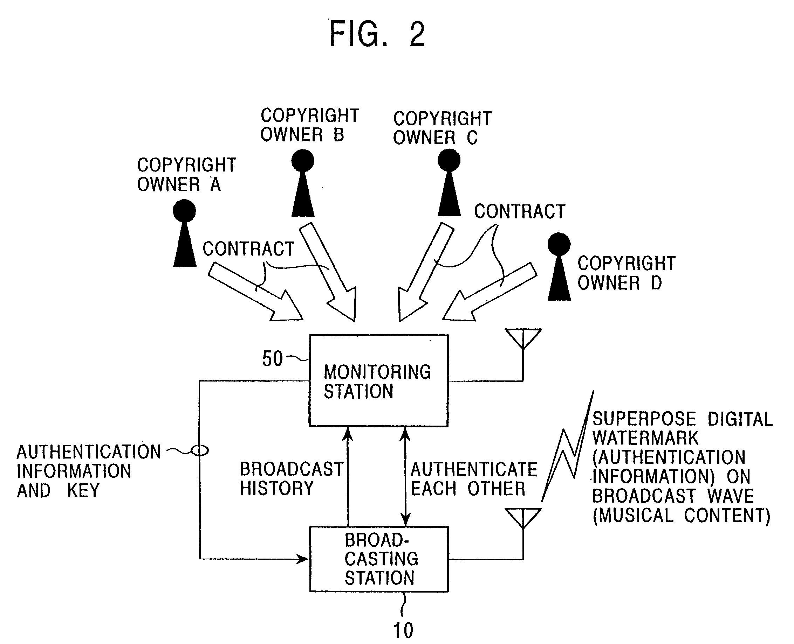

In the example shown in Fig. 1, a monitoring station is set for each copyright owner. However, as shown in Fig. 2, a single monitoring station may provide monitoring services for use of content to plural copyright owners.

Also, in actuality, there is a plurality of broadcasting stations, and the copyright owner must monitor the copyright owner's own authored material, that is, the content use status, for all the broadcasting stations. The copyright owner may set up a monitoring station for each broadcasting station, or a single monitoring station may handle plural broadcasting stations.

In the following, for the sake of convenience, a description is given by using, as an example, a case in which one monitoring station 50 monitors one broadcasting station 10.

The broadcasting station 10 and the monitoring station 50 are interconnected with each other via a secure transmission line, such as a dedicated line 20, and what is commonly called "impersonation" can be blocked by causing a predetermined authentication procedure to be performed.

During the period in which authentication is being established between them, the monitoring station 50 supplies, to the broadcasting station 10, broadcasting station identification information (hereinafter referred to as a "broadcasting station ID"), time identification information (hereinafter referred to as a "time ID"), and an encryption key. In the following, the information composed of the combination of the broadcasting station ID and the time ID is called "authentication information". The authentication information enables authentication of a use consent for content.

However, the time identification information need not necessarily be contained in the authentication information. For example, the time identification information may be replaced with another identification information by which each record of the broadcast information (to be described later) stored in the broadcast station can be addressed.
[Broadcasting station ID] : [Time ID] : [Key]

The broadcasting station ID is a proof such that the monitoring station 50 which handles content use for the copyright owner has authenticated the broadcasting station 10, and further, has consented to the use of the authored material. When the monitoring station 50 consents to the use of authored material in a constant or fixed manner, the monitoring station 50 need only transfer the broadcasting station ID to the broadcasting station 10 only once after authentication has been established. When, on the other hand, use of authored material is consented to only in a time-limited manner, it is necessary to transfer a new broadcasting station ID to the broadcasting station 10 each time use of the authored material is newly consented to during the period in which the authentication has been established. The time-limited broadcasting station ID can be managed in combination with, for example, the time ID (to be described later). In the case of the implementation of the latter case, the monitoring station 50 can supply a consent for using the authored material for each broadcast program or for each broadcast time zone.

Furthermore, the time ID is identification information which is uniquely related to the current time, and, for example, may be the time data itself. When the provision of the time ID by the monitoring station 50 and the content distribution in the broadcasting station 10, that is, a program broadcast, are being performed in real time (or when the time lag between the provision of the time ID and the content distribution is a fixed value), the time ID can specify the broadcast time of a program and the broadcast content itself.

The key is an encryption key which is used to encrypt predetermined authentication information composed of the broadcasting station ID and the time ID on the broadcasting station 10 side and to further decrypt the encrypted information in the monitoring station 50. When one key is used in a fixed manner, the monitoring station 50 need only transfer the key only once to the broadcasting station 10 after the authentication has been established. However, in order to prevent reuse of a key, it is necessary for the monitoring station 50 to change the key as time elapses and to transfer the key to the broadcasting station 10 each time the key is changed. In the case of the latter case, the key can be recognized as a time-related function key (t). The key (t) may be managed in association with the time ID.

For the key used herein, either a common key encryption method in which the same key is used at the time of encryption and decryption or a public key encryption method in which a secret key and a public key are formed in combination may be used. However, in the following description, for the sake of convenience, a common key is used.

On the broadcasting station 10 side, a broadcast wave in which the authentication information received from the monitoring station 50 is superposed onto the distribution content is generated, and the broadcast wave is transmitted that is, broadcast, to each receiver.

The authentication information, as described above, is composed of the combination (for example, each ID is bit-coupled) of the broadcasting station ID and the time ID. When a broadcast is performed in real time with the authentication by the broadcasting station 10, the time ID may be omitted. However, on the receiver side, in order to specify the source of the broadcast content stored on a recording medium, that is, the copyright owner of the authored material, it is preferable that the time ID be used as a part of the authentication information.

In realizing the present invention, the form in which the authentication information is attached to the broadcast content does not particularly matter. For example, the broadcasting station ID and the time ID may be superposed on each other by using a digital watermarking technique. In such a case, the authentication information may be superposed on either the content itself or on the broadcast wave. As a result of using a digital watermarking technique, it is not at all necessary for receivers such as ordinary viewers and listeners to be concerned with the presence of the authentication information.

When digital watermarking is performed on a broadcast wave rather than on the original content, the present invention can be applied by merely changing the equipment of the broadcasting station. Also, since the digital watermark need not be provided in the content itself, it is possible to appropriately perform copyright management on a content which originates from a recording medium such as a CD, which has already been in common use.

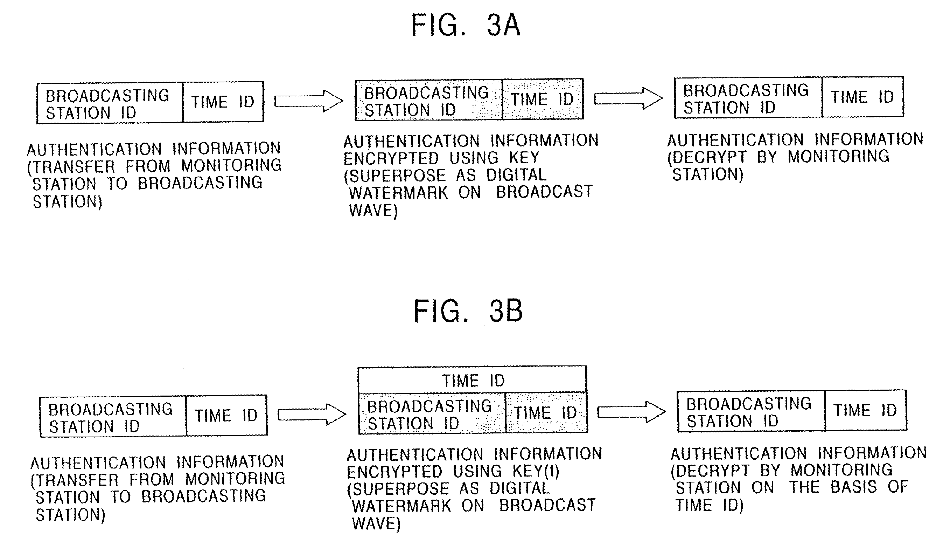

Furthermore, in order that the authentication information which is embedded by digital watermarking be protected against falsification, the authentication information composed of the broadcasting station ID and the time ID may be encrypted (see Fig. 3A) using the key received from the monitoring station 50, after which the authentication information is superposed onto the broadcast wave. In such a case, it is necessary for the monitoring station 50 to decrypt the authentication information. Furthermore, when the key is a function of time, key (t), the monitoring station 50 must determine which key should be used for decryption. Therefore, the information (see Fig. 3B) in which a time ID in the form of plain text is further attached to the encrypted authentication information may be superposed onto the broadcast wave. It is possible for the monitoring station 50 to determine the applicable key (t) on the basis of the time ID.

The broadcasting station 10 stores the broadcast history information about the contents which are broadcast by the broadcasting station 10 itself so as to manage a database. For the database, it is preferable that records be created for each broadcast content. Each record has fields for storing each of at least a content ID, a time ID, and a broadcasting station ID, as shown below:
[Content ID] : [Time ID] : [Broadcasting station ID]

The content ID referred to herein is information by which a broadcast content can be uniquely identified. For example, in the case of a music content, an ISRC which is defined in the ISO (International Organization for Standardization) 3901 can be used. Furthermore, in the case of a commercial, an ISCI can be used. In addition to these, a tag affixed to a sequence may be used content ID.

The history information which is formed into a database is transferred to the monitoring station 50 as necessary (for example, in response to a request). Alternatively, the monitoring station 50 can access the history information database independently.

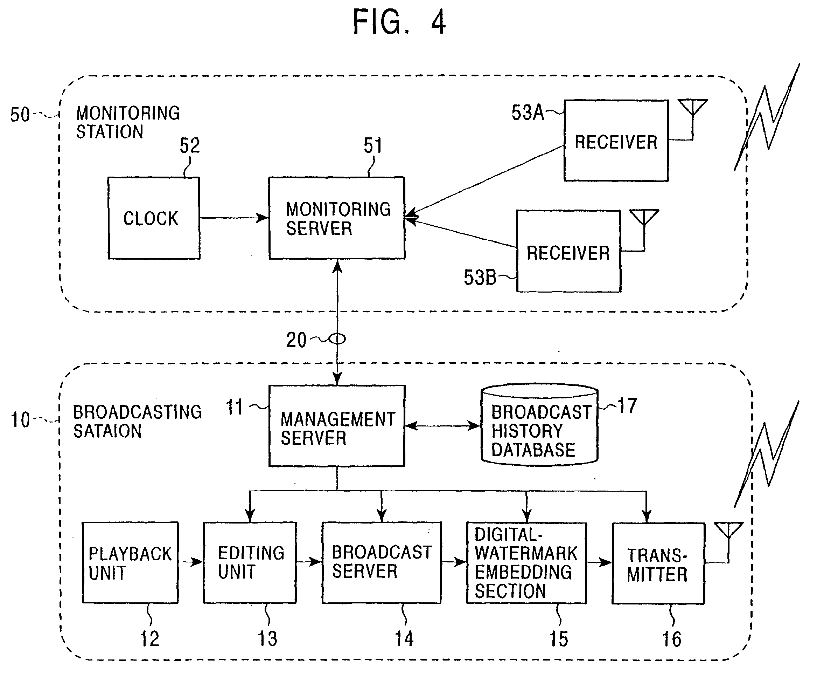

Fig. 4 shows in more detail the configuration of the content distribution system 100 according to the embodiment of the present invention.

As shown in Fig. 4, the monitoring station 50 comprises a monitor server 51, a clock 52 for providing the current time, and one or more receivers 53A and 53B for receiving the broadcast wave of the broadcasting station 10. It is assumed that the monitor server 51 is connected to each section by a secure communication method, such as encrypted communication.

The monitor server 51 is connected to the management server 11 through a secure transmission line, such as the dedicated line 20, so that authentication can be established between the monitoring station 50 and the broadcasting station 10 in accordance with a predetermined procedure. As a result of establishing the authentication, the monitor server 51 can supply authentication information, such as the broadcasting station ID and the time ID, and the key to the broadcasting station 10.

The broadcasting station 10 comprises a management server 11 for centrally managing the operations within the station, a playback unit 12, an editing unit 13, a broadcast server 14, a digital-watermark embedding section 15, a transmitter 16, and a broadcast history database 17. It is assumed that the management server 11 is connected to each section by a secure communication method, such as encrypted communication.

The playback unit 12 plays back content in media, such as music, video, announcements, etc. Also, the editing unit 13 integrates and edits each played-back content in media in order to edit a broadcast content. The edited results are stored in the broadcast server 14.

The broadcast server 14 is connected to the management server 11 at all times by a secure communication method, such as encrypted communication. Thus, the broadcast history about media playback, and the broadcast content editing and recording can be securely stored in the broadcast history database 17. In the broadcast history database 17, for example, records are created for each broadcast content, and each record has fields for storing each of at least a content ID, a time ID, and a broadcasting station ID, as described earlier.

Also, the broadcast server 14 completes the editing results by the editing unit 13 in form in which they can be distributed as broadcast waves, and outputs these at a scheduled time (for example, a broadcast time) controlled by the management server 11.

The digital-watermark embedding section 15 embeds the authentication information received from the monitor server 51 as a digital watermark. The authentication information is composed of-the broadcasting station ID and the time ID. In this case, in order that the falsification of the authentication information be prevented, it is preferable that the authentication information be embedded after being encrypted using the key received from the monitor server 51. Furthermore, in order to improve the level of security, it is preferable that the key be changed as time elapses. In this case, in order to make it easy to determine the key used, the encrypted authentication information to which a time ID in the form of plain text is attached may be embedded (see description above and Fig. 3B).

The transmitter 16 emits a broadcast wave in which authentication information is embedded in a manner as described above. The broadcast wave, however, may be a terrestrial wave or a satellite wave, and the transmission line may be either wireless or cables. Furthermore, as a modification of the present invention, the path of the content distribution may be for content distribution through a network such as a LAN (Local Area Network) or the Internet, or through a public telephone network such as PSTN (Public Switched Telephone Network) or ISDN (Integrated Services Digital Network). Furthermore, the content distribution form may be either a push type or a pull type.

The management server 11 and the monitor server 51 are connected to each other through a secure transmission line such as a dedicated line, so that authentication can be established between the monitoring station 50 and the broadcasting station 10 in accordance with a predetermined procedure. As a result of establishing the authentication, the management server 11 can supply, to the monitor server 51, history information stored in the broadcast history database 17 as necessary (for example, in response to a request). Alternatively, the monitor server 51 can access the history information database.

The broadcasting station 10 usually produces a broadcast program by using the contents of a plurality of copyright owners. Also, as shown in Fig. 1, there are cases in which one broadcasting station 10 is placed under the supervision of a plurality of monitoring stations 50 which are set for each copyright owner. In such a case, transmitting all the records stored in the broadcast history database 17 to all the monitor stations 50A, 50B, ..., is inefficient and irrational. The reason for this is that disclosure of the use status of the authored material to those other than the copyright owner corresponds to an invasion of privacy, and transferring of more data than is necessary increases the communication load unnecessarily. Therefore, the history information should be filtered for each copyright owner and transmitted to the monitoring station 50.

For example, in the case of the ISRC assigned to the music content, it is formed of five groups 1 to 5. Of these, three digits corresponding to group 3 indicate a first owner code. By performing filtering by using this group 3 as a mask, it is possible to extract only the history information relating to the contents of a specific copyright owner. In contrast, on the monitoring station 50 side, the distribution status of each content can be managed on the basis of the history information. For example, it is possible to charge an accurate copyright royalty, corresponding to the number of times the content is used, to the distribution apparatus, that is, the broadcasting station.

Next, a description is given of the processing procedure for monitoring the use status of a piece of authored material in the monitoring station 50. However, the authored material referred to herein refers to a music content used during a broadcast program in the broadcasting station 10, the user of the authored material is the broadcasting station 10, and the monitoring object is a broadcast wave emitted from the broadcasting station 10.

When the monitoring receivers 53A and 53B receive a broadcast wave, the monitoring receivers 53A and 53B decode the digital watermark in order to extract the authentication information, and transfers this to the management server 11 in a secure form.

It is possible for the management server 11 to confirm that the broadcasting station 10 is using the authored material, that is, a content, with authorization based on the fact that the authentication information is contained in the broadcast wave. When the authentication information is not contained in the content, since this means that the broadcasting station 10 is using the authored material without authorization, a penalty may be imposed on the broadcasting station 10. The penalty may be an action for depriving or suspending the content use right for a predetermined period.

Furthermore, embedding the authentication information encrypted using a key by the broadcasting station 10 makes it possible to determine whether or not there has been impersonation in the distribution path. That is, when the authentication information cannot be decoded using a key corresponding to the broadcast content, it can be determined that impersonation has occurred. Also, when authentication information in a form such as that shown in Fig. 3B is embedded, a case in which the time ID attached in plain text does not match the time ID obtained by decoding the authentication information can be determined as being a case of impersonation.

The management server 11 monitors the system from the playback unit 12 up to the transmitter 16, and confirms that the content is not falsified, after which the management server 11 requests the monitor server 51 to issue a key. As a result, only the broadcast history information whose security has been confirmed is stored in the broadcast history database 17.

The present invention has thus been described in detail while referring to a specific embodiment. It is self-explanatory that modifications and substitutions of the embodiment may be made without departing from the spirit and scope of the present invention by a person skilled in the art.

In the above-described embodiment, an ISRC, tags affixed to a sequence, etc., are used, as a content ID, for the digital watermark, but the content ID is not particularly limited thereto. For example, even if data in which a part or all of a musical piece is compressed or data in which a part of a musical piece is sampled, is used for the digital watermark, the same operational effects can be obtained.

In summary, the present invention has been disclosed in the form of exemplifications and should not be construed as being limited thereby. In order to determine the gist of the present invention, the claims should be taken into consideration.

As has thus been described in detail, according to the present invention, it is possible to provide a superior content distribution technique which is capable of distributing or providing content to a large number of people, for example, in the form of broadcast waves and network transfer.

According to embodiments of the present invention, it is possible to provide a superior content distribution technique which is capable of securely distributing or providing content having a predetermined use right, including copyright, such as music, video, etc.

According to embodiments of the present invention, it is possible to provide a superior content distribution technique in which it is possible for a right owner of content to appropriately manage or monitor a distribution or provision status of the content.

According to embodiments of the present invention, it is possible to provide a superior content distribution technique which is capable of appropriately managing or monitoring a distribution or provision status of content with respect to content played back from a recording medium which has already been distributed.

According to embodiments of the present invention, as a result of performing digital watermarking on a broadcast wave rather than on the original content, adaptations are possible by merely changing the equipment of the broadcasting station. Furthermore, since the digital watermark need not be provided in the content itself, it is possible to appropriately perform copyright management on a content which originates from a recording medium such as a CD, which has already been in common use.

Many different embodiments of the present invention may be constructed without departing from the scope of the present invention. It should be understood that the present invention is not limited to the specific embodiment described in this specification. To the contrary, the present invention is intended to cover various modifications and equivalent arrangements included within the scope of the invention as hereafter claimed. The scope of the following claims is to be accorded the broadest interpretation so as to encompass all such modifications, equivalent structures and functions.

## Claims

1. A content distribution system for distributing content owned by a predetermined right owner, comprising:
a monitoring apparatus for monitoring the distribution of contents by issuing authentication information showing a content-use consent; and
a distribution apparatus for distributing the content with the attached authentication information received from said monitoring apparatus via a predetermined distribution path.

2. A content distribution system according to claim 1, wherein said monitoring apparatus obtains the content being distributed in said predetermined distribution path and determines the validity of the content distribution operation by the distribution apparatus on the basis of whether or not the authentication information is attached to the content.

3. A content distribution system according to claim 1, wherein said monitoring apparatus issues, as authentication information, the set of time identification information showing the current time and distributor identification information assigned to the distribution apparatus.

4. A content distribution system according to claim 1, wherein said monitoring apparatus issues an encryption key in addition to the authentication information, and said distribution apparatus distributes the content with the attached authentication information encrypted using the encryption key received from said monitoring apparatus.

5. A content distribution system according to claim 1, wherein said distribution apparatus embeds the authentication information into the content by using a digital watermarking technique.

6. A content distribution system according to claim 1, wherein said distribution apparatus embeds the authentication information into a distribution signal of the content by using a digital watermarking technique.

7. A content distribution system according to claim 1, wherein each content has specific content identification information, and said distribution apparatus stores the distribution history of each content distributed via said predetermined distribution path in such a manner as to be associated with the content identification information.

8. A content distribution system according to claim 1, wherein each content has specific content identification information, said distribution apparatus stores the distribution history of each content distributed via said predetermined distribution path in such a manner as to be associated with the content identification information, and transfers only the history information associated with specific content by masking the distribution history with a predetermined filter.

9. A content distribution system according to claim 1, wherein each content has specific content identification information, said distribution apparatus stores the distribution history of each content distributed via said predetermined distribution path in such a manner as to be associated with the content identification information, and said monitoring apparatus manages the distribution status of each content on the basis of the distribution history.

10. A content distribution system according to claim 1, wherein each content has specific content identification information, said distribution apparatus stores the distribution history of each content distributed via said predetermined distribution path in such a manner as to be associated with the content identification information, and said monitoring apparatus causes identification information by which the distribution history can be addressed to be contained in said authentication information.

11. A content distribution method for distributing content owned by a predetermined right owner, comprising:
a first step of issuing authentication information showing a content-use consent;
a second step of distributing the content via a predetermined distribution path with the attached authentication information issued in said first step; and
a third step of monitoring the distribution of the content in said distribution path.

12. A content distribution method according to claim 11, wherein said third step obtains content being distributed in said predetermined distribution path and determines the validity of the content distribution operation on the basis of whether or not authentication information is attached to the content.

13. A content distribution method according to claim 11, wherein said first step issues, as authentication information, the set of time identification information showing the current time and distributor identification information assigned to the distribution of the content.

14. A content distribution method according to claim 11, wherein said first step issues an encryption key in addition to the authentication information, and said second step distributes the content via said predetermined distribution path with the attached authentication information encrypted using the encryption key issued in said first step.

15. A content distribution method according to claim 11, wherein said second step embeds authentication information into the content by using a digital watermarking technique.

16. A content distribution method according to claim 11, wherein said second step embeds authentication information into a distribution signal of the content by using a digital watermarking technique.

17. A content distribution method according to claim 11, each content having specific content identification information, said content distribution method further comprising:
a fourth step of storing the distribution history of each content distributed via said predetermined distribution path in said second step in such a manner as to be associated with the content identification information.

18. A content distribution method according to claim 11, each content having specific content identification information, said content distribution method further comprising:
a fourth step of storing the distribution history of each content distributed via said predetermined distribution path in said second step in such a manner as to be associated with the content identification information; and
a fifth step of extracting only the history information associated with specific content by masking the distribution history with a predetermined filter.

19. A content distribution method according to claim 11, each content having specific content identification information, said content distribution method further comprising:
a fourth step of storing the distribution history of each content distributed via said predetermined distribution path in said second step in such a manner as to be associated with the content identification information; and
a sixth step of managing a state in which each content is distributed on the basis of the distribution history.

20. A content distribution method according to claim 11, each content having specific content identification information, said content distribution method further comprising:
a fourth step of storing the distribution history of each content distributed via said predetermined distribution path in said second step in such a manner as to be associated with the content identification information,
wherein said first step issues authentication information in such a manner as to contain identification information by which the distribution history can be addressed.

21. A content monitoring apparatus for monitoring the use of content owned by a predetermined right owner, said content monitoring apparatus comprising:
means for issuing authentication information showing a use consent to a content user.

22. A content monitoring apparatus according to claim 21, wherein said authentication information contains at least time identification information showing the current time and distributor identification information assigned to the distributor.

23. A content monitoring apparatus according to claim 21, wherein said authentication information contains at least distributor identification information assigned to the distributor and identification information by which the distribution history of the content in the distributor can be addressed.

24. A content monitoring apparatus according to claim 21, wherein an encryption key is issued in addition to the authentication information.

25. A content monitoring apparatus according to claim 21, further comprising:
means for-obtaining the content being used and checking the presence or absence of the authentication information.

26. A content monitoring apparatus according to claim 21, further comprising:
means for managing a content use status on the basis of the content use history of a content user.

27. A content monitoring method for monitoring use of content owned by a predetermined right owner, comprising the step of:
issuing authentication information showing a use consent to a content user.

28. A content monitoring method according to claim 27, wherein said authentication information contains at least time identification information showing the current time and distributor identification information assigned to the distributor.

29. A content monitoring method according to claim 27, wherein said authentication information contains at least distributor identification information assigned to the distributor and identification information by which the distribution history of the content in the distributor can be addressed.

30. A content monitoring method according to claim 27, wherein an encryption key is issued in addition to the authentication information.

31. A content monitoring method according to claim 27, comprising the step of:
obtaining the content being used and checking the presence or absence of the authentication information.

32. A content monitoring method according to claim 27, comprising the step of:
managing a content use status on the basis of the content use history of a content user.

33. A content using apparatus for using content after receiving a consent from a predetermined right owner, comprising:
receiving means for receiving authentication information showing a content-use consent from the outside; and
using means for using the content with the received authentication information attached.

34. A content using apparatus according to claim 33, wherein said using means distributes the content with the authentication information via a predetermined distribution path.

35. A content using apparatus according to claim 33, wherein said authentication information contains at least time identification information showing the current time and user identification information assigned to the user.

36. A content using apparatus according to claim 33, wherein said authentication information contains at least distributor identification information assigned to the distributor and identification information by which the use history of the content in the distributor can be addressed.

37. A content using apparatus according to claim 33, wherein said receiving means receives an encryption key in addition to the authentication information, and said using means uses the content with attached authentication information encrypted using the encryption key.

38. A content using apparatus according to claim 33, wherein said using means embeds the authentication information into the content by using a digital watermarking technique.

39. A content using apparatus according to claim 33, wherein said using means embeds the authentication information into a distribution signal of the content by using a digital watermarking technique.

40. A content using apparatus according to claim 33, each content having specific content identification information, said content using apparatus further comprising:
history information storage means for storing the use history of each content used in said using means in such a manner as to be associated with the content identification information.

41. A content using apparatus according to claim 33, each content having specific content identification information, said content using apparatus further comprising:
history information storage means for storing the use history of each content used in said using means in such a manner as to be associated with the content identification information; and
history information extraction means for extracting only the history information associated with specific content from said history information storage means by masking the stored use history with a predetermined filter.

42. A content using apparatus according to claim 33, each content having specific content identification information, said content using apparatus further comprising:
history information storage means for storing the use history of each content used in said using means in such a manner as to be associated with the content identification information; and
use status management means for managing a use status of each content on the basis of the stored use history.

43. A content using method for using content after receiving a consent from a predetermined right owner, comprising:
a receiving step of receiving authentication information showing a content-use consent from the outside; and
a using step of using the content with the received authentication information attached.

44. A content using method according to claim 43, wherein said using step distributes the content with the authentication information via a predetermined distribution path.

45. A content using method according to claim 43, wherein said authentication information contains at least time identification information showing the current time and user identification information assigned to the user.

46. A content using method according to claim 43, wherein said authentication information contains at least distributor identification information assigned to the distributor and identification information by which the use history in the distributor can be addressed.

47. A content using method according to claim 43, wherein said receiving step receives an encryption key in addition to the authentication information, and said using step uses the content with the attached authentication information encrypted using the encryption key.

48. A content using method according to claim 43, wherein said using step embeds authentication information into the content by using a digital watermarking technique.

49. A content using method according to claim 43, wherein said using step embeds authentication information into a distribution signal of content by using a digital watermarking technique.

50. A content using method according to claim 43, each content having specific content identification information, said content using method further comprising:
a history information storing step of storing the use history of each content used in said using step in such a manner as to be associated with the content identification information.

51. A content using method according to claim 43, each content having specific content identification information, said content using method further comprising:
a history information storing step of storing the use history of each content used in said using step in such a manner as to be associated with the content identification information; and
a history information extraction step of extracting only the history information associated with specific content by masking the stored use history with a predetermined filter.

52. A content using method according to claim 43, each content having specific content identification information, said content using method further comprising:
a history information storing step of storing the use history of each content used in said using step in such a manner as to be associated with the content identification information; and
a use status managing step of managing a use status of each content on the basis of the stored use history.
